# EUROPÄISCHE PATENTSCHRIFT

(11) **EP 0 670 343 B1**
(45) Veröffentlichungstag und Bekanntmachung des Hinweises auf die Patenterteilung: **08.09.1999**
(21) Anmeldenummer: 95103085.7
(22) Anmeldetag: 03.03.1995
(51) Int. Cl.: C08J 5/06

(54) **Penetrationshilfsmittel**
Penetration aids
Auxiliaire de pénétration

(30) Priorität: 04.03.1994 DE 4407246
(43) Veröffentlichungstag der Anmeldung: 06.09.1995
(73) Patentinhaber: EMS-INVENTA AG, 8001 Zürich (CH)
(72) Erfinder: Kurz, Günter, Dipl. Ing., CH-7015 Tamins (CH); Wenzler, Manfred, Dipl. Ing., CH-7013 Domat/Ems (CH)
(74) Vertreter: Becker, Eberhard, Dr.

(56) Entgegenhaltungen:
- EP-A- 0 052 315
- US-A- 5 019 602
- DATABASE WPI Week 9311, Derwent Publications Ltd., London, GB; AN 93-088807 & JP-A-5 032 868 (SAKAMOTO YAKUHIN KK)
- DATABASE WPI Week 8323, Derwent Publications Ltd., London, GB; AN 83-55040K & JP-A-58 071 917
- Römpp Chemie Lexikon, 9.Auflage, Band 6(1992), G.Thieme Verlag, Stuttgart, Seite 4891 "Verdünnungsmittel"

## Beschreibung

Die Erfindung betrifft den in den Patentansprüchen angegebenen Gegenstand.

Die Erfindung betrifft insbesondere die Verwendung eines Penetrationshilfsmittels zum Behandeln von textilen elastomerkompatiblen Verstärkungssubstraten, welche beispielsweise in Keil- und Treibriemen, Förderbändern, Reifen und Schläuchen eingesetzt werden.

Textile Verstärkungssubstrate aus Polyester, Polyamid oder Aramidfasern benötigen auf Grund ihrer ungenügenden Kautschukhaftung in der Regel eine Vorbehandlung mit Haftvermittlern.

Die Haftvermittler werden bei der Faserherstellung oder bei der Textilausrüstung appliziert.

Besonders geeignet als Haftvermittler sind Epoxide und Isocyanate sowie verkappte Isocyanate. Bevorzugt sind Isocyanate mit polyfunktioneller Struktur. Die Isocyanate werden zwecks besserer Applikation und Penetration in der Regel in organischen Lösungsmitteln angewandt.

EP 0 052 315 beschreibt ein Verfahren zum Imprägnieren von Textilcorden durch Tränken des Textilcordes in zwei unterschiedlichen Imprägnier-Bädern, wobei das erste Imprägnierbad ein Isocyanat und das zweite Imprägnierbad ein Resorcin-Formaldehyd-Kautschuklatex enthält und jeweils nach erfolgter Tränkung sich anschließender Wärmbehandlung, wobei das erste Imprägnierbad aus einer Lösung aus Kautschuk und Polyisocyanat und/oder Polyepoxid in einem aliphatischen oder aromatischen oder chlorierten Kohlenwasserstoff besteht.

Die Lösungsmittel sind gesundheitsschädlich und erfordern große Aufwendungen zur Luftreinhaltung und Wiederaufarbeitung. Es bestand daher ein Bedürfnis nach lösungsmittelfreien Haftvermittlersystemen.

Der Erfindung liegt die Aufgabe zugrunde, ein Penetrationshilfsmittel für Verstärkungssubstrate, die Elastomere verstärken sollen, zur Verfügung zu stellen, das die Nachteile des oben erwähnten Standes der Technik überwindet, und das insbesondere flüchtige und damit umweltbelastende organische Lösungsmittel und wäßrige Medien ersetzt.

Diese Aufgabe wird gelöst durch die Verwendung des Penetrationshilfsmittels mit den kennzeichnenden Merkmalen von Anspruch 1

Es wurde festgestellt, daß überraschenderweise langkettige, aliphatische monofunktionelle Glycidylether mit mindestens 10 C-Atomen eine ausgezeichnete Penetrationswirkung bei Elastomerverstärkungssubstraten aufweisen. Bevorzugt sind Monoglycidylether mit 12 bis 15 C-Atomen oder deren Gemische, wie beispielsweise GRILONIT® RV 1814 oder Epoxide 8 der EMS-CHEMIE AG.

Die Monoglycidylether sind reaktive Penetrationsmittel, welche über Epoxidgruppen reagieren und in Haftvermittlersystemen eingebaut werden. Ihr Emulgier- und Lösungsvermögen ist für Isocyanate, Epoxide, elastifizierende Zusätze und pre-adhesivierende Additive sehr gut. Sie besitzen eine sehr niedrige Viskosität von weniger als 10 mPa.s 25 °C und eine günstige Oberflächenspannung, welche ein sehr gutes Benetzungsverhalten und eine ausgezeichnete Penetration auf den textilen Verstärkungssubstraten bewirken.

Bevorzugte Additive im erfindungsgemäßen Penetrationshilfsmittel sind somit elastifizierende Polymere, wie reaktive und nichtreaktive Latizes, und vernetzende monomere und/oder polymere Verbindungen wie Polyglycidylether, Polyole und Polyesterpolyole. Besonders bevorzugte vernetzende Monomere oder Polymere sind polyfunktionelle Isocyanat-Verbindungen, unter deren Diphenylmethan-4,4'-diisocyanat ganz besonders bevorzugt ist. Auch polyfunktionelle Epoxide allein oder in Verbindung mit polyfunktionellen Isocyanat-Verbindungen sind bevorzugt.

Vorteilhafterweise liegen die Gewichtsverhältnisse der Isocyanat-Verbindung zum Penetrationshilfsmittel zwischen 90:10 und 10:90. Bevorzugt sind Gewichtsverhältnisse zwischen 30:70 und 50:50, insbesondere für die Verstärkungsfasern Polyester, Aramid oder für Polyesterfolien. Die besonderen Vorteile der polyfunktionellen Isocyanat-Verbindungen als Additive liegen in den Möglichkeiten, die Substrate durch Vernetzungsreaktionen der Isocyanate vor ihrer Einarbeitung in die Elastomeren zu versteifen.

Besonders vorteilhaft ist, daß in Lösungen oder Emulsionen die Additive im Penetrationshilfsmittel bei Lagerungs- und Auftragstemperaturen genügend stabil sind.

Ein weiterer Vorteil des erfindungsgemäß verwendeten Penetrationshilfsmittel ist, daß infolge der deutlich verbesserten Haftfestigkeiten für ein definiertes Festigkeitsniveau weniger Diphenylmethan-4,4'-diisocyanat notwenig ist, als nach dem Stand der Technik.

Ein Verfahren bei dem das erfindungsgemäße Penetrationsmittel eingesetzt wird, besteht aus dem Benetzungsschritt, der durch Tauchen, Sprühen, Streichen, Klotzen, Saugen oder Walzenauftrag erfolgen kann, und das anschließende Befreien des Substrats vom überschüssigen Penetrationshilfsmittel, bevorzugt durch Abquetschen. Die aufgebrachte Menge, bevorzugt 3 bis 6 Gew.-%, bezogen auf das Substrat, die mit dem Fachausdruck "dip pickup" bezeichnet wird, wird anschließend 0,1 bis 30 Minuten bei 100 bis 250 °C, bevorzugt bei 130 bis 200 °C, auf dem Substrat fixiert.

Das Auftragen der verschiedenen Additive zum Elastifizieren und Vernetzen kann selbstverständlich wahlweise in Einzelschritten oder gemeinsam erfolgen.

Anschließend kann zur weiteren Verbesserung der Substratbenetzungsfähigkeit eine Latex-Vorimprägnierung vorgenommen werden, die ebenfalls eine Fixierung bei Temperaturen bis 250 °C benötigt. Nach dem Stand der Technik sind dafür Resorzin-Formaldehyd-Latex-Mischungen (RFL) besonders geeignet.

Erfindungsgemäß kommen in einer bevorzugten Ausführungsform Verstärkungssubstrate aus der Gruppe Kord und Kordgewebe zum Einsatz.

Damit ist auch die Verwendung des erfindungsgemäßen Penetrationshilfsmittels zur Herstellung elastomerkompatibler Verstärkungssubstrate in der Erfindung eingeschlossen.

### Beispiel 1

Dieses Beispiel zeigt die Benetzungsfähigkeit von pre-adhesiviertem, für die Herstellung von verstärkten Kautschuk-Artikeln geeigneten Polyestergewebe (nachfolgend PA-PES) bei Verwendung der erfindungsgemäßen Monoglycidylether (MGE) als Penetrationshilfsmittel in Abmischung mit Diphenylmethan-4,4'-diisocyanat (PMDI).

Ein 5,7 x 30cm geschnittenes PA-PES-Gewebe wird am schmalen Ende 1 cm tief in die zu prüfende flüssige Probe gehängt und bei 23 °C gemäß der nachstehenden Tabelle die Steighöhe der Flüssigkeit auf dem Gewebe in Funktion der Zeit gemessen.

**Tabelle 1**

| Dauer [Min.] | ¹PMDI 15 Gew.-% in Toluol | Steighöhe [mm] ¹PMDI 100 % | ¹PMDI 40 Gew.-% in MGE | ²MGE 100 % |
|---|---|---|---|---|
| 2 | 45 | 8 | 20 | 30 |
| 5 | 55 | 15 | 30 | 40 |
| 15 | 65 | 22 | 50 | 65 |
| 30 | 73 | 37 | 65 | 85 |
| 60 | 80 | 50 | 82 | 110 |
| 120 | 88 | 53 | 105 | 145 |
| Bemerkungen | Toluol verdampft, Penetration wird gestoppt | | Penetration geht weiter mit nicht flüchtigem Penetrationsmittel | |

| | | | | |
|---|---|---|---|---|
| ¹ PMDI = Diphenylmethan-4,4'-diisocyanat | | | | |
| ² MGE = Monoglycidylether | | | | |

Der Vergleich zeigt deutlich, daß z.B. eine Mischung von 40 Gew.-% PMDI im erfindungsgemäßen Penetrationshilfsmittel MGE nachhaltiger penetriert und dadurch die Voraussetzung zu größerer Wirksamkeit liefert. Das ist um so mehr der Fall, wenn, wie voraussetzungsgemäß, nicht mehr das lösungsmittelhaltige, sondern als direkte Alternative das 100 %ige PMDI zum Vergleich verwendet wird.

### Beispiel 2

Beispiel 2 zeigt das erreichbare Haftniveau von GRILONIT® RV 1814, CAS 68081-84-5, einem Monoglycidylether der EMS-CHEMIE AG, als Penetrationshilfsmittel MGE in Abmischungen mit abnehmenden Mengen Desmodur® VK, CAS 9016-87-9, der Bayer AG als PMDI-Komponente. Zwecks direkter Vergleichbarkeit mit der lösungsmittelhaltigen PMDI-Imprägnierung als Ausgangssituation und zum Ausschluß von unbekannten, die Qualität beeinflussenden Applikationsfaktoren, wird in diesem Beispiel lösungsmittelhaltig appliziert.

Das Haftniveau wird mittels dem Schältest (Two ply strip adhesion test) an Prüfkörpern, welche bei 160 °C während 30 Minuten vulkanisiert werden, ermittelt.

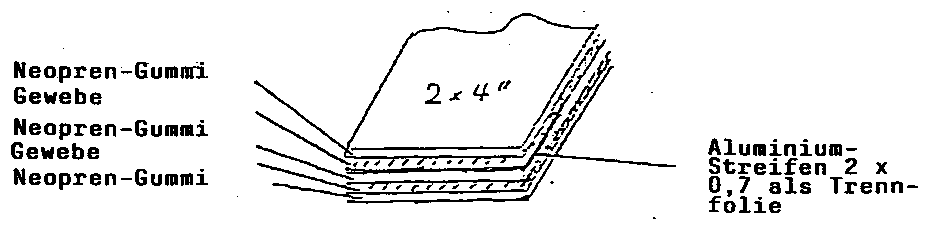

Das dafür verwendete pre-adhesivierte PES-Gewebe wird zuerst während 30 Sekunden in die lösungsmittelhaltige PMDI- bzw. MGE/PMDI-Lösung getaucht und anschließend während 10 Minuten bei Raumtemperatur abgelüftet. Nach anschließender Trocknung bei 130 °C/12 Minuten im Umlufttrockenschrank wird die RFL-Folgeschicht aufgebracht. Hierzu wird das, wie oben beschrieben, vorbehandelte Gewebe 30 Sekunden in das RFL-Bad getaucht, 10 Minuten bei Raumtemperatur abgelüftet und diese Prozedur noch zweimal wiederholt. Danach wird bei 130 °C während 30 Minuten getrocknet und vorreagiert. Das so behandelte Gewebe ist nun steif und für den Zuschnitt und als Einlage in oben beschriebenem Probekörper geeignet.

Die verwendete RFL-Lösung wird wie folgt zubereitet:

0,5 Gewichtsteile (nachfolgend GT) Natriumhydroxid 100 %ig werden in 90,5 GT entionisiertem Wasser bei Raumtemperatur gelöst. Nach Zugabe von 4,4 GT Resorzin 100 %ig und 4,6 GT wäßriger Formaldehydlösung 37 %ig wird während 2,5 Stunden bei Raumtemperatur leicht gerührt. Danach werden unter Rühren 48,3 GT dieser Zubereitung zu 51,7 GT einer wäßrigen Latex gegeben und 8 bis 24 Stunden bei leichter Rührung und bei Raumtemperatur gealtert.

Die oben verwendete wäßrige Latex besteht aus 37,6 GT Latex Typ 571 (= Neopren-Latex der Firma DuPont) plus 14,1 GT entionisiertem Wasser. Der verwendete Neopren-Gummi steht als kalandriertes unvulkanisiertes ca. 0,7 mm dickes Gummifell zur Verfügung.

**Tabelle 2**

| | | | | | | | |
|---|---|---|---|---|---|---|---|
| ¹PMDI-Anteil in Trägerflüssigkeit | Gew.-% | 100 | 90 | 80 | 60 | 40 | 30 |
| ²MGE | Gew.-T | -- | 1,5 | 3 | 6 | 9 | 10,5 |
| PMDI | Gew.-T | 15 | 13,5 | 12 | 9 | 6 | 4,5 |
| Toluol | Gew.-T | 85 | 85 | 85 | 85 | 85 | 85 |
| Material auf Gewebe 100 % (dip pickup) | Gew.-% | 3,8 | 3,6 | 3,7 | 3,7 | 3,7 | 3,6 |
| Kohäsionsriß | % Fläche | 100 | 100 | 100 | 100 | 100 | 100 |
| Durchschnittliche Trennfestigkeit | N | 192 | 194 | 202 | 201 | 206 | 208 |

| | | | | | | | |
|---|---|---|---|---|---|---|---|
| ¹ = Diphenylmethan-4,4'-diisocyanat | | | | | | | |
| ² = Monoglycidylether | | | | | | | |

Alle Mischungen von PMDI im Penetrationshilfsmittel MGE zeigen 100 % Kohäsionsriß im Gummi und durchwegs höhere durchschnittliche Trennfestigkeiten als das Vergleichsbeispiel mit PMDI allein. Mit abnehmendem PMDI-Anteil besteht Tendenz zu zunehmenden Trennfestigkeiten.

### Beispiel 3

Analog Beispiel 2 wird diesem Beispiel das erreichbare Haftniveau von GRILONIT® RV 1814 als Penetrationshilfsmittel in Abmischung 60/40 Gew.-% mit Desmodur® VK als PMDI-Komponente und bei erfindungsgemäßer Applikation ohne Lösungsmittel gezeigt.

**Tabelle 3**

| | | |
|---|---|---|
| ²MGE | Gew.-T | 60 |
| ¹PMDI | Gew.-T | 40 |
| Material auf Gewebe 100 % (dip-pick up) | Gew.-% | 3,6 |
| Kohäsionsriß | % Fläche | 100 |
| Durchschnittliche Trennfestigkeit | N | 208 |

| | | |
|---|---|---|
| ¹ = Diphenylmethan-4,4'-diisocyanat | | |
| ² = Monoglycidylether | | |

## Patentansprüche

1. Verwendung eines linearen aliphatischen Monoglycidylethers mit mindestens 10 C-Atomen als Penetrationshilfsmittel für elastomerkompatible Verstärkungssubstrate.

2. Verwendung nach Anspruch 1, dadurch gekennzeichnet, daß der Monoglycidylether ausgewählt ist aus der Gruppe der Glycidylether mit 12 bis 15 C-Atomen sowie deren Gemische.

3. Verwendung nach Anspruch 1 oder 2, dadurch gekennzeichnet, daß das Penetrationshilfsmittel ferner Additive aus der Gruppe elastifizierende Polymere, vernetzende Monomere oder Polymere enthält.

4. Verwendung nach Anspruch 3, dadurch gekennzeichnet, daß das vernetzende Monomer oder Polymer eine Isocyanat-Verbindung oder eine polyfunktionelle Epoxid-Verbindung oder ein Gemisch davon ist.

5. Verwendung nach Anspruch 4, dadurch gekennzeichnet, daß die Isocyanat-Verbindung ein polyfunktionelles Isocyanat ist.

6. Verwendung nach Anspruch 5, dadurch gekennzeichnet, daß das polyfunktionelle Isocyanat Diphenylmethan-4,4'-diisocyanat ist.

7. Verwendung nach einem der vorhergehenden Ansprüche 4 bis 6, dadurch gekennzeichnet, daß das Isocyanat im Penetrationshilfsmittel im Gewichtsverhältnis 90 zu 10 bis 10 zu 90, bevorzugt 30 zu 70 bis 50 zu 50, vorliegt.

8. Verwendung nach einem der vorhergehenden Ansprüche 1 bis 7, dadurch gekennzeichnet, daß das Verstärkungssubstrat aus der Gruppe Polyesterfolie, Polyesterfaser und Aramidfaser besteht.

9. Verwendung nach Anspruch 8, dadurch gekennzeichnet, daß die Polyester- oder Aramidfasern als Kord oder Kordgewebe vorliegen.

## Claims

1. Use of a linear aliphatic monoglycidylether having at least 10 carbon atoms as penetration aids for enhancing substrates being compatible to elastomers.

2. The use according to claim 1, characterised in that the monoglycidylether is selected from the group of glycidylethers having 12 to 15 carbon atoms and mixtures thereof.

3. The use according to claim 1 or 2, characterised in that the penetration aid additionally contains additives from the group of elasticating polymers, crosslinking monomers or polymers.

4. The use according to claim 3, characterised in that the crosslinking monomer or polymer is an isocyanate compound or a polyfunctional epoxide compound or a mixture thereof.

5. The use according to claim 4, characterised in that the isocyanate compound is a polyfunctional isocyanate.

6. The use according to claim 5, characterised in that the polyfunctional isocyanate is diphenylmethane-4,4'-diisocyanate.

7. The use according to any of the preceding claims 4 to 6, characterised in that the penetration aid contains the isocyanate in a ratio (w/w) of between 90 to 10 and 10 to 90, preferably from 30 to 70 to 50 to 50.

8. The use according to any of the preceding claims 1 to 7, characterised in that the enhancing substrate consists of the group of polyester film, polyester fibre and aramide fibre.

9. The use according to claim 8, characterised in that the polyester- or aramide fibres are present as corduroy or corduroy cloth.

## Revendications

1. Utilisation d'un monoglycidyléther aliphatique linéaire comportant au minimum 10 atomes de carbone en tant qu'auxiliaire de pénétration pour substrats de renforcement compatibles avec les élastomères.

2. Utilisation selon la revendication 1, caractérisée en ce que le monoglycidyléther est choisi parmi le groupe des glycidyléthers comportant 12 à 15 atomes de carbone ainsi que leurs mélanges.

3. Utilisation selon la revendication 1 ou 2, caractérisée en ce que l'auxiliaire de pénétration comprend en outre des additifs choisis dans le groupe des polymères élastifiants, des monomères ou des polymères réticulants.

4. Utilisation selon la revendication 3, caractérisée en ce que le monomère ou polymère réticulant est un composé isocyanate ou un composé époxyde polyfonctionnel ou un de leurs mélanges.

5. Utilisation selon la revendication 4, caractérisée en ce que le composé isocyanate est un isocyanate polyfonctionnel.

6. Utilisation selon la revendication 5, caractérisée en ce que l'isocyanate polyfonctionnel est le diphénylméthane-4,4'-diisocyanate.

7. Utilisation selon l'une quelconque des revendications précédentes 4 à 6, caractérisée en ce que l'isocyanate dans l'auxiliaire de pénétration est présent en rapport de poids compris entre 90/10 à 10/90, de préférence entre 30/70 à 50/50.

8. Utilisation selon l'une quelconque des revendications 1 à 7, caractérisée en ce que le substrat de renforcement est choisi dans le groupe consistant en feuille de polyester, fibre de polyester et fibre d'aramide.

9. Utilisation selon la revendication 8, caractérisée en ce que les fibres de polyester ou d'aramide sont des cordes ou des tissus de corde.
